# EUROPEAN PATENT SPECIFICATION

(11) **EP 2 857 909 B1**
(45) Date of publication and mention of the grant of the patent: **15.05.2019**
(21) Application number: 14186671.5
(22) Date of filing: 26.09.2014
(51) Int. Cl.: G05B 15/02, G05B 11/42

(54) **Frequency shifted PI controller**
Frequenzverschobene PI-Steuerung
Dispositif de commande PI à fréquence décalée

(30) Priority: 03.10.2013 US 201361886529 P; 23.01.2014 US 201414162240
(43) Date of publication of application: 08.04.2015
(73) Proprietor: Hamilton Sundstrand Corporation, Charlotte, NC 28217 (US)
(72) Inventor: White, Adam Michael, Belvidere, IL 61008 (US)
(74) Representative: Dehns

(56) References cited:
- WO-A1-92/11588

## Description

### FIELD

The present disclosure relates to automatic control system design, and more particularly, to systems and methods of a frequency shifted proportional-integral controller.

### BACKGROUND

Conventional proportional-integral-derivative (PID) controllers utilize a control loop feedback architecture. For instance, a PID controller may calculate an error value as the difference between a measured process variable and a desired set point/control variable. A PI controller may share some of the functionality as the functionality of a PID controller. WO92/11588 describes a sinusoidal signal amplitude and phase control for adaptive feedback control system.

### SUMMARY

The present disclosure relates to a system including a frequency shifted PI controller system utilizing input band-shifting by a disturbance frequency, a PI control architecture and output inverse band-shifting by the disturbance frequency. The frequency shifted PI controller system may eliminate errors and/or take control action based on past and present control errors. The feedback signal may be multiplied by the sine of the theta position of the frequency of interest and the feedback signal may be multiplied by the cosine of the theta position of the frequency of interest. Stated another way, the initial feedback signal is parsed into sine and cosine components at a particular frequency. This effectively band-shifts the feedback signal for treatment by the PI controller.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 depicts a representative structure of a frequency shifted PI controller, in accordance with various embodiments;
FIG. 2 depicts an implementation of a controller configured for 3-level inverter midpoint balancing, in accordance with various embodiments; and
FIGS. 3A and 3B depict representative test performance of a representative frequency shifted PI controller in a 3-level inverter, in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosure, it should be understood that other embodiments may be realized and that logical changes may be made without departing from the spirit and scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step.

The present disclosure relates to the design of a feedback controller for a single input single output (SISO) plant, where the controller is configured for DC regulation of a control quantity as well as rejection (such as a complete rejection) of a disturbance at a known frequency. According to various embodiments, the frequency shifted proportional-integral (PI) controller disclosed herein may be configured to, and/or utilized to, address this disturbance at the known frequency. Additionally, the frequency shifted proportional-integral (PI) controller is well-suited for midpoint balancing control of a three-level inverter or rectifier. The PI controller output is comprised of the sum of the proportional and integral control actions of the PI controller.

Traditionally, controllers have been designed to regulate to a constant set point value, such as controlling a motor speed at a substantially constant 10,000 rpm. Proportional integral type controllers are well suited for holding steady the average value rate of the command, (e.g. 10,000 rpm); however, for systems having a reoccurring disturbance (such as periodic speed oscillations), a proportional integral type controller is not able to eliminate the disturbance. In many circumstances, it is preferable that the oscillation be reduced or eliminated. Among other attributes, the frequency shifted proportional-integral (PI) controller disclosed herein provides an approach for eliminating and/or reducing that oscillation (e.g. a disturbance, such as a sinusoidal disturbance, at a known frequency).

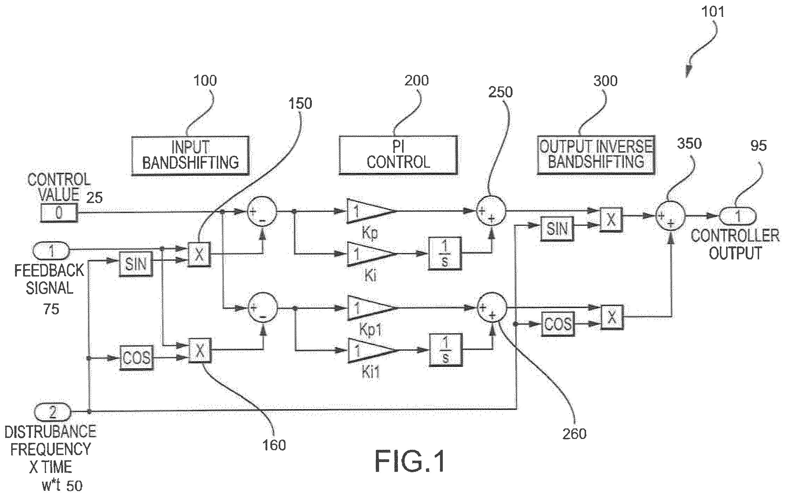

According to various embodiments, and with reference to FIG. 1, the structure of a frequency shifted PI controller system 101 utilizing input band-shifting 100, a PI control architecture 200 and inverse band-shifting 300 is disclosed. The frequency shifted PI controller system 101 may eliminate errors and/or take control action based on past and present control errors. In an ideal case, the control signal of PI control architecture 200 may be considered the sum of terms, such as a proportional term that is proportional to the error (acts on present value of the error) and an integral term that is proportional to the integral of the error (average of past errors). Thus, PI controller 200 parameters may be proportional gain Kₚ and integral gain Kᵢ.

With continued reference to FIG. 1, the inputs to the PI controller system 101 may include a control value 25, such as zero, a feedback signal 75, and an integral (theta position) 50 of a known frequency (e.g. the frequency that the system will tend to experience oscillations). Depicted by representative multiplier box 150, the feedback signal may be multiplied by the sine of the theta position of the frequency of interest.

Depicted by representative multiplier box 160 the feedback signal may be multiplied by cosine of the theta position of the frequency of interest. Stated another way, the initial feedback signal is parsed into sine and cosine components at a particular frequency. This effectively band-shifts the feedback signal for treatment by the PI controller.

In the frequency domain, the feedback signal is shifted (e.g., down or up) by the determined frequency omega, generally speaking, such that the disturbance oscillation becomes a DC quantity. The PI controller is configured to eliminate that disturbance because the disturbance is now at a DC level and can be eliminated by a PI controller. For instance, in response to an error being present (e.g. process variable not being at the set point), the integral control mode will continuously increment or decrement the PI controller's output to reduce the error. Given enough time, integral action will drive the controller output far enough to reduce the error to zero. The proportional control mode changes the controller output in proportion to the error. In response to the error increasing, the control action increases in kind (proportionally). The adjustable setting for proportional control may be referred to as the proportional gain Kₚ control parameter. A larger proportional gain Kₚ control parameter will increase the amount of proportional control action for a given error. In general, in response to the controller gain being set too high, the control loop will begin oscillating and become unstable. In response to the controller gain being set too low, the controller will not respond adequately to disturbances or set point changes. Thus, the proportional gain Kₚ control parameter may be tuned to optimize its functionality.

System 101 is configured to achieve at least partial rejection of periodic disturbances. The amount of disturbance rejection of periodic disturbances may be limited by controller bandwidth and proportional gain. The bandwidth and thus high frequency disturbance rejection may be limited by stability constraints.

The PI controller may be configured to act on the band-shifted (down) frequency signal to eliminate the disturbance. The output stage transforms the band-shifted treated signal back to the original frequency of the feedback signal. Stated another way, via integral control action the PI controller is able to reject, for example to perfectly reject, any DC disturbance at the PI controller input, which therefore likewise rejects (due to input band-shifting and output inverse band-shifting) the AC disturbance that was present at feedback signal 75, at the known disturbance frequency contained in signal 50. The proportional gain control output and the integral gain control output are summed together for both the sine component 250 and the cosine component 260.

A check may be made that the system is operating properly, according to the following description. Proportional gains of 1 for the Kₚ modes and integral gains of zero for the Kᵢ modes are used to check that system 101 is operating properly. The resultant gain of the controller from feedback signal 75, to controller output 95 is sine squared plus cosine squared (e.g. a gain of 1 regardless of the disturbance frequency integral input 50). Stated another way, the input and output band-shifting cancel each other out (i.e., are inverse to one-another).

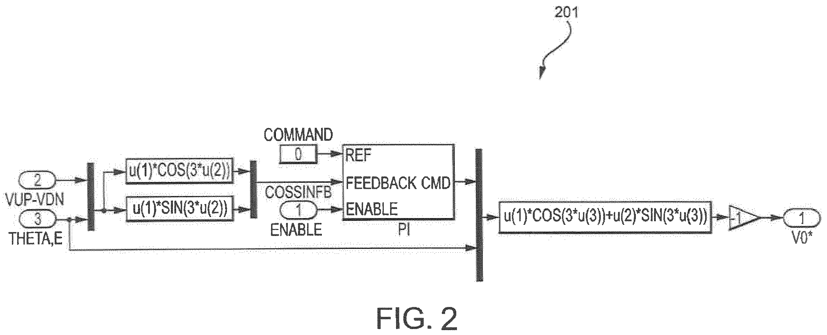

According to various embodiments and with reference to FIG. 2, a feedback signal is frequency shifted by a given frequency. Though it could be any frequency or any order of disturbance, this frequency is generally determined by the frequency at which the largest disturbance rejection is desired. The band-shifting is completed by multiplying the feedback signal by sine and cosine carrier signals at the band-shifting frequency. In response to this transformation, the disturbance at the shifting frequency will be transformed to DC. In response to this the band-shifting operation, a traditional PI controller acts on the band-shifted signal. The integral portion of the PI controller will completely cancel any component of error at DC (i.e. the error originally found at the band-shifting frequency). The proportional gain determines the minimum gain across the remainder of the frequency spectrum. An inverse band-shift transformation is applied to the output of the PI controller in order to shift the command output signal back to the original reference frame (prior frequency of the feedback signal).

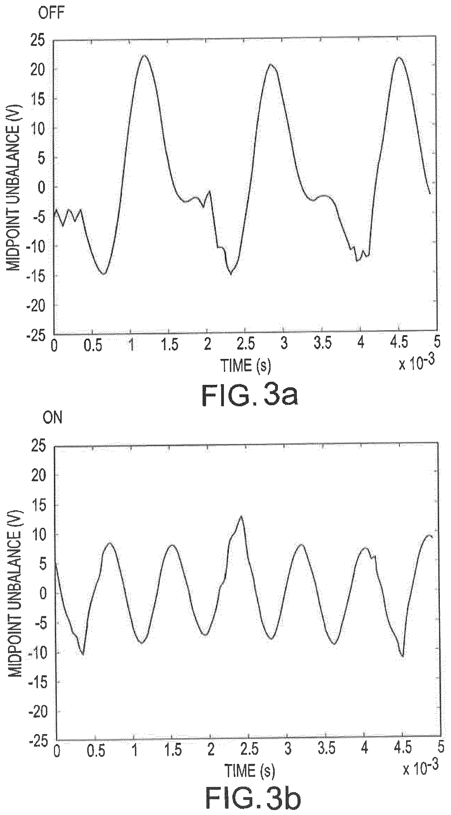

FIGS. 3A and 3B depict before and after midpoint voltage regulation graphs associated with the system depicted in FIG. 2. As depicted in FIG. 3A, the midpoint voltage of a three-level inverter is shown. The midpoint voltage ripple is dominated by content (a disturbance) at 600 Hz (e.g. 3 times the 200 fundamental frequency of an inverter output voltage). FIG. 3B depicts the midpoint voltage regulation of the same inverter of FIG. 3A in response to activation of the frequency shifted PI controller, with a 600 Hz band-shifting frequency. As shown, the 600 Hz content is completely removed.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more."

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments. Different cross-hatching is used throughout the figures to denote different parts but not necessarily to denote the same or different materials.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A frequency shifted proportional-integral controller configured to:
band-shift a feedback signal (75) by a frequency of interest into parsed sine and cosine components and multiply the feedback signal (75) by each of the sine and cosine components;
perform proportional-integral control of a control value (25) band-shifted sine component and a control value (25) band-shifted cosine component, **characterized by** the following features: The proportional-integral control is configured to at least one of eliminate and reduce a disturbance on the output of the system by rejecting a DC disturbance in a band-shifted control value;
inverse band-shift the sine component back to its original band;
inverse band-shift the cosine component back to its original band; and
sum the inverse band-shifted sine component and the inverse band-shifted cosine component together to result in a controller output.

2. The frequency shifted proportional-integral controller of claim 1, wherein the frequency of interest is at least one of a frequency where the largest oscillating disturbance on an output signal is experienced and a frequency of the second largest oscillating disturbance on the output signal.

3. The frequency shifted proportional-integral controller of claim 1, wherein the frequency shifted proportional-integral controller is configured to control a DC midpoint voltage in at least one of a three-level active rectifier and a three-level active inverter.

4. The frequency shifted proportional-integral controller of claim 1,
wherein the control value band-shifted sine component is created by summing the sine component of the band-shifted feedback signal with a control value (25), and
wherein the control value band-shifted cosine component is created by summing the cosine component of the band-shifted feedback signal with the control value (25).

5. The frequency shifted proportional-integral controller of claim 1, wherein the frequency shifted proportional-integral controller is configured to perform DC regulation of a control quantity using proportional gain.

6. The frequency shifted proportional-integral controller of claim 1, wherein the frequency shifted proportional-integral controller is configured to partially reject periodic disturbances.

7. A system comprising:
a frequency shifted proportional-integral controller structure, as claimed in any preceding claim, configured for the feedback control of a single input single output (SISO) plant,
wherein the inputs to the system are a feedback signal (75), a theta position (50) of a frequency of interest and a control value (25), and
wherein the feedback signal (75) is parsed into sine and cosine components at the frequency of interest.

8. The system of claim 7, wherein sine of the the theta position (50) of the frequency of interest is multiplied by the feedback signal (75).

9. The system of claim 7, wherein the feedback signal (75) is multiplied times the cosine of the theta position (50) of the frequency of interest.

10. The system of claim 7, wherein the frequency shifted proportional-integral controller is configured to reject a disturbance at the frequency of interest.

## Patentansprüche

1. Frequenzverschobene Proportional-Integral-Steuerung, konfiguriert, um:
eine Bandverschiebung eines Rückführsignals (75) um eine Frequenz von Interesse in geparste Sinus- und Cosinus-Komponenten durchzuführen und das Rückführsignal (75) mit jeder der Sinus- und Cosinus-Komponenten zu multiplizieren;
die Proportional-Integral-Steuerung einer bandverschobenen Sinus-Komponente eines Steuerwerts (25) und einer bandverschobenen Cosinus-Komponente eines Steuerwerts (25) durchzuführen, **gekennzeichnet durch** die folgenden Merkmale:
Die Proportional-Integral-Steuerung ist konfiguriert, um mindestens eines aus einer Störung am Ausgang des Systems durch Verwerfen einer DC-Störung in einem bandverschobenen Steuerwert zu beseitigen und zu verringern;
die Sinus-Komponente einer inversen Bandverschiebung zurück zu ihrem ursprünglichen Band zu unterziehen;
die Cosinus-Komponente einer inversen Bandverschiebung zurück zu ihrem ursprünglichen Band zu unterziehen; und
die invers bandverschobene Sinus-Komponente und die invers bandverschobene Cosinus-Komponente zu summieren, um eine Steuerungsausgabe zu erhalten.

2. Frequenzverschobene Proportional-Integral-Steuerung nach Anspruch 1, wobei die Frequenz von Interesse mindestens eine aus einer Frequenz ist, bei der die größte oszillierende Störung eines Ausgabesignals auftritt, und einer Frequenz der zweitgrößten oszillierenden Störung des Ausgabesignals.

3. Frequenzverschobene Proportional-Integral-Steuerung nach Anspruch 1, wobei die frequenzverschobene Proportional-Integral-Steuerung konfiguriert ist, um eine DC-Mittelpunktspannung in mindestens einem aus einem aktiven Dreipunkt-Gleichrichter und einem aktiven Dreipunkt-Wechselrichter zu steuern.

4. Frequenzverschobene Proportional-Integral-Steuerung nach Anspruch 1, wobei die bandverschobene Sinus-Komponente des Steuerwerts durch Summieren der Sinus-Komponente des bandverschobenen Rückführsignals mit einem Kontrollwert (25) erzeugt wird, und
wobei die bandverschobene Kosinus-Komponente des Steuerwerts durch Summieren der Kosinus-Komponente des bandverschobenen Rückführsignals mit einem Kontrollwert (25) erzeugt wird.

5. Frequenzverschobene Proportional-Integral-Steuerung nach Anspruch 1, wobei die frequenzverschobene Proportional-Integral-Steuerung konfiguriert ist, um die DC-Regelung einer Steuermenge unter Verwendung proportionaler Verstärkung durchzuführen.

6. Frequenzverschobene Proportional-Integral-Steuerung nach Anspruch 1, wobei die frequenzverschobene Proportional-Integral-Steuerung konfiguriert ist, um periodische Störungen teilweise zu verwerfen.

7. System, umfassend:
eine frequenzverschobene Proportional-Integral-Steuerungsstruktur nach einem der vorstehenden Ansprüche, die für die Rückführsteuerung eines Eingrößensystems (SISO-System) konfiguriert ist,
wobei die Eingaben zum System ein Rückführsignal (75), eine Theta-Position (50) einer Frequenz von Interesse und ein Steuerwert (25) sind, and
wobei das Rückführsignal (75) in Sinus- und Kosinuskomponenten bei der Frequenz von Interesse geparst wird.

8. System nach Anspruch 7, wobei der Sinus der Theta-Position (50) der Frequenz von Interesse mit dem Rückführsignal (75) multipliziert wird.

9. System nach Anspruch 7, wobei das Rückführsignal (75) mit dem Kosinus der Theta-Position (50) der Frequenz von Interesse multipliziert wird.

10. System nach Anspruch 7, wobei die frequenzverschobene Proportional-Integral-Steuerung konfiguriert ist, um eine Störung bei der Frequenz von Interesse zu verwerfen.

## Revendications

1. Dispositif de commande proportionnelle-intégrale à fréquence décalée configuré pour :
décalage en bande un signal de rétroaction (75) d'une fréquence d'intérêt en composantes sinus et cosinus analysées et multiplier le signal de rétroaction (75) par chacune des composantes sinus et cosinus ;
effectuer une commande proportionnelle-intégrale d'une composante sinus à bande décalée de valeur de commande (25) et d'une composante cosinus à bande décalée de valeur de commande (25), **caractérisé par** les caractéristiques suivantes :
la commande proportionnelle-intégrale est configurée pour éliminer et/ou réduire une perturbation sur la sortie du système en rejetant une perturbation CC dans une valeur de commande à bande décalée ;
décaler en bande inversée la composante sinus de retour à sa bande d'origine ;
décaler en bande inversée la composante cosinus de retour à sa bande d'origine ; et
additionner la composante sinus à bande décalée inversée et la composante cosinus à bande décalée inversée pour obtenir une sortie de dispositif de commande.

2. Dispositif de commande proportionnelle-intégrale à fréquence décalée selon la revendication 1, dans lequel la fréquence d'intérêt est au moins l'une parmi une fréquence où la plus grande perturbation oscillante sur un signal de sortie est subie et une fréquence de la deuxième plus grande perturbation oscillante sur le signal de sortie.

3. Dispositif de commande proportionnelle-intégrale à fréquence décalée selon la revendication 1, dans lequel le dispositif de commande proportionnelle-intégrale à fréquence décalée est configuré pour commander une tension de point intermédiaire CC dans au moins l'un parmi un redresseur actif à trois niveaux et un onduleur actif à trois niveaux.

4. Dispositif de commande proportionnelle-intégrale à fréquence décalée selon la revendication 1,
dans lequel la composante sinus à bande décalée de valeur de commande est créée en additionnant la composante sinus du signal de rétroaction à bande décalée avec une valeur de commande (25), et
dans lequel la composante cosinus à bande décalée de valeur de commande est créée en additionnant la composante cosinus du signal de rétroaction à bande décalée avec la valeur de commande (25).

5. Dispositif de commande proportionnelle-intégrale à fréquence décalée selon la revendication 1, dans lequel le dispositif de commande proportionnelle-intégrale à fréquence décalée est configuré pour effectuer une régulation CC d'une quantité de commande en utilisant un gain proportionnel.

6. Dispositif de commande proportionnelle-intégrale à fréquence décalée selon la revendication 1, dans lequel le dispositif de commande proportionnelle-intégrale à fréquence décalée est configuré pour rejeter partiellement des perturbations périodiques.

7. Système comprenant :
une structure de dispositif de commande proportionnelle-intégrale à fréquence décalée, selon une quelconque revendication précédente, configurée pour la commande par rétroaction d'un équipement à entrée unique-sortie unique (SISO),
dans lequel les entrées dans le système sont un signal de rétroaction (75), une position thêta (50) d'une fréquence d'intérêt et une valeur de commande (25), et
dans lequel le signal de rétroaction (75) est analysé en composantes sinus et cosinus à la fréquence d'intérêt.

8. Système selon la revendication 7, dans lequel le sinus de la position thêta (50) de la fréquence d'intérêt est multiplié par le signal de rétroaction (75).

9. Système selon la revendication 7, dans lequel le signal de rétroaction (75) est multiplié par le cosinus de la position thêta (50) de la fréquence d'intérêt.

10. Système selon la revendication 7, dans lequel le dispositif de commande proportionnelle-intégrale à fréquence décalée est configuré pour rejeter une perturbation à la fréquence d'intérêt.
